# EUROPEAN PATENT APPLICATION

(11) **EP 3 989 037 A1**
(43) Date of publication of application: **27.04.2022**
(21) Application number: 20474002.1
(22) Date of filing: 26.10.2020
(51) Int. Cl.: G05G 9/053, B64C 13/04, G05G 9/047

(54) **HANDLEBAR WITH HANDLE AT THE INTERSECTION OF THE AXES OF THE ANGULAR DISPLACEMENT SENSORS**

(71) Applicant: Mihely, Rudolf, 040 11 Kosice (SK)
(72) Inventor: Mihely, Rudolf, 040 11 Kosice (SK)

(57) **Abstract**

The invention is essentially derived from the fact that the center of the handle (7) of the handlebar is identical to the intersection of the axes of the angular displacement sensors (1), i.e. with the beginning of the coordinate system, where the coordinates *x, y, z* coincide with the axes of the angular displacement sensors (1). The torque from the handle (7) of the handlebar connected with the core cover (6) is transmitted to the angular displacement sensors (1) located in the handlebar core (3) by means of cross drivers (5) through the sensor couplings (4). The inner part of the cross driver (5) fits into a groove of the sensor coupling (4) and the outer part fits into a groove of the core cover (6). The handlebar core (3) is fixed to the machine or device by a conduit tube (2), passing through an opening in the core cover (6), in the direction of the body diagonal in the imaginary cube, centered at the beginning of the above mentioned coordinate system. The power supply for the angular displacement sensors (1) and the signal terminals is directed through the conduit tube (2). The solution allows the control of machines and devices in three rotational degrees of freedom, corresponding to the human natural reflexes.

## Description

### Technical field

The invention relates to a handlebar with a handle grip at the intersection of the axes of the angular displacement sensors and addresses the problem of the instinctive control of machines and devices, in particular aircrafts, corresponding to natural human reflexes in three rotational degrees of freedom.

### Background of the invention

The current state of the handlebars originates from the time of the development of mechanics, when the transfer of movement from the handlebars to the controlled element of the machine or the device was only possible by means of a rope or tubular rod. The handlebars used so far are therefore the handle or the pedal positioned outside the intersection point of their angular deflection axes or outside the intersection point of their angular displacement sensors (joysticks). The handle is usually shifted in the direction of the *z* coordinate. This means that if you want to rotate the device in the direction of *x* or *y* axis, the handle is being deflected. Since the deflection angle tends to be small, in terms of the impact on the handlebar, it is rather translational movement than a rotational movement. When driving, we have to be aware that the movement of the handle left or right means rotation in the direction of the *y*-axis, and the movement of the handle forward or back means rotation in the direction of the x-axis. In the third degree of freedom, when turning in the z-axis, foot-operated pedals are used. By pushing the right pedal forward, the left one moves backwards, i.e. they rotate to each other to the left, but the aircraft rotates to the right. On the contrary, if we want to turn the aircraft to the left, we have to move the pedals to each other to the right. We do not act instinctively with these handlebars, we have to learn how to steer.

### Summary of the invention

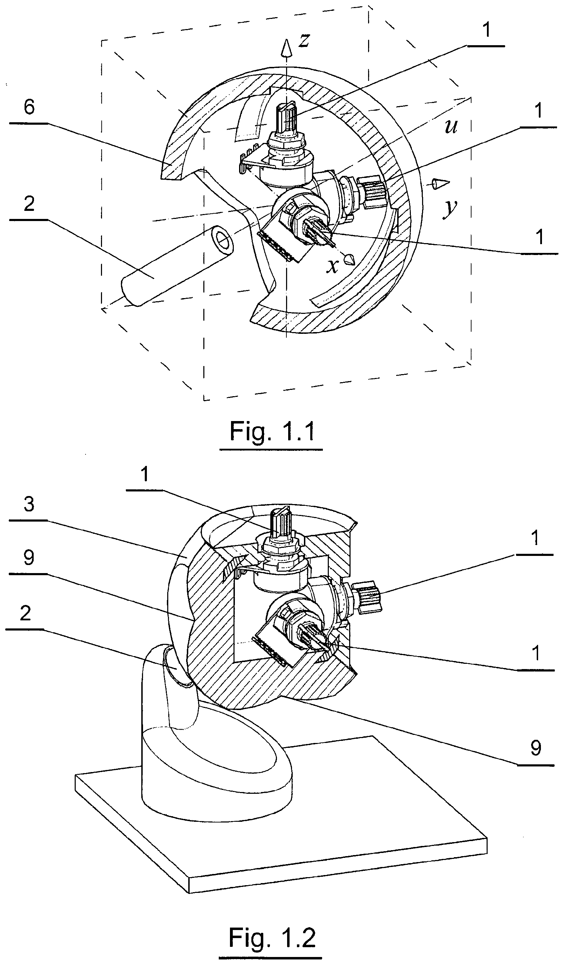

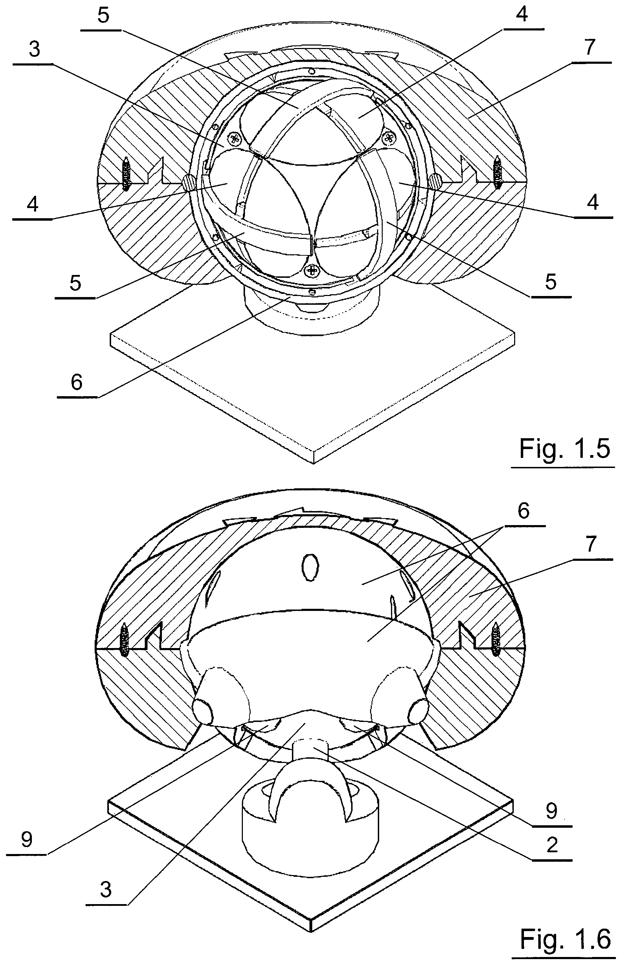

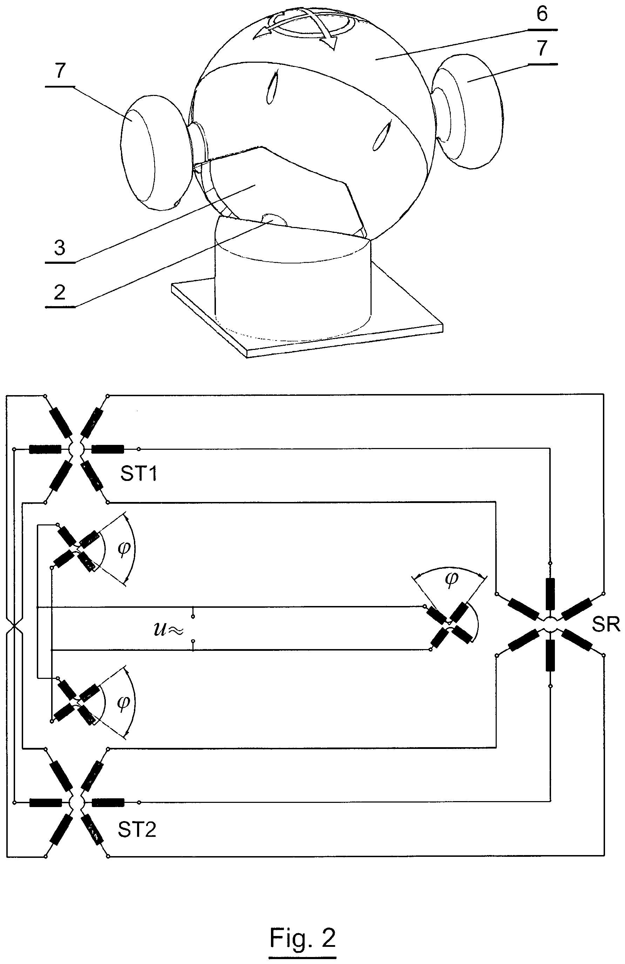

The above deficiencies are eliminated by the handlebar with handle at the intersection of the axes of the angular displacement sensors. The principle of the invention lies in the fact that the center of the handle 7 of the handlebar is identical to the intersection of the axes of the angular displacement sensors, i.e. to the beginning of the Cartesian coordinate system, where the coordinates *x*, *y*, *z* coincide with the axes of the angular displacement sensors 1. This allows the machine or device to be controlled in three rotational degrees of freedom. The handle 7 of the handlebar can be of various shapes, adapted to the anatomy of the hand, most often to the shape of the rotating flattened ellipsoid (Fig. 1.5), but also to the shape of the two-handed handle (Fig. 2) for both single and double action control. The torque from the handle 7 of the handlebar connected to the core cover 6 is transmitted by means of the cross carriers 5 via the sensor couplings 4 to the angular displacement sensors 1 located in the handlebar core 3. The inner part of the cross carrier 5 fits into the groove in the sensor coupling 4 and the outer part into the groove in the core cover 6. The handlebar core 3 is fixed to the machine or device by a conduit tube 2. The tube passes through the opening in the core cover 6, in the direction of the body diagonal *u* of the imaginary cube, the center of which is located at the beginning of the coordinate system mentioned above (Fig. 1.1). The size and shape of the opening in the core cover 6 are derived from the diameter of the conduit tube 2 and the range of the angular deflection of the angular displacement sensors 1. The power supply and the signal output of the angular displacement sensors 1 are conducted through the conduit tube 2.

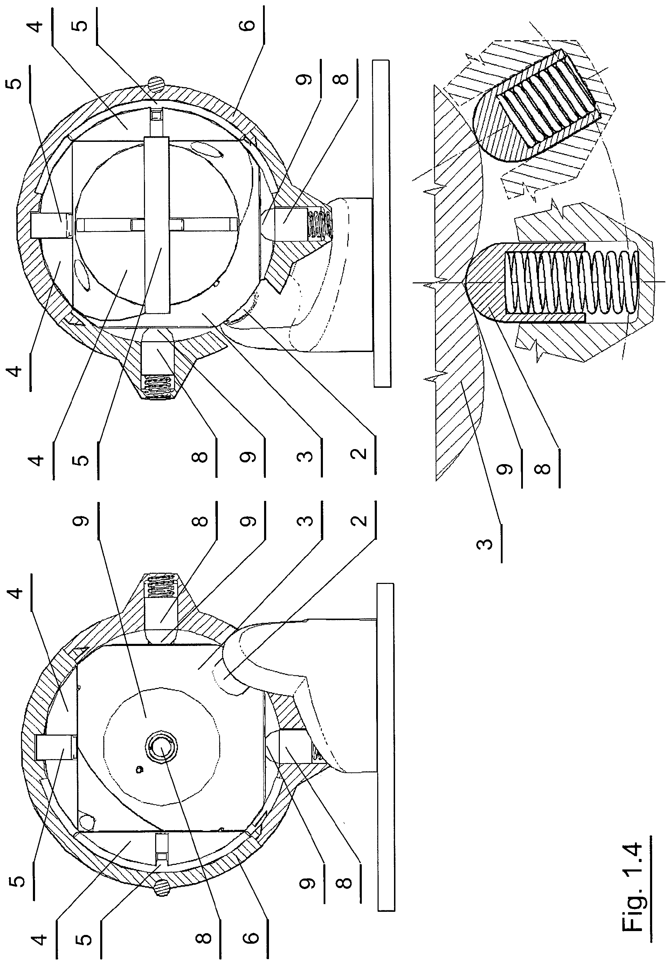

When needed to lock the handlebar in the zero position, we use bushing 8 with springs, reversing effect of which is realized by moving along the recesses 9 in the handlebar core 3 with a constant inclination of surfaces to the angle (Fig. 1.4).

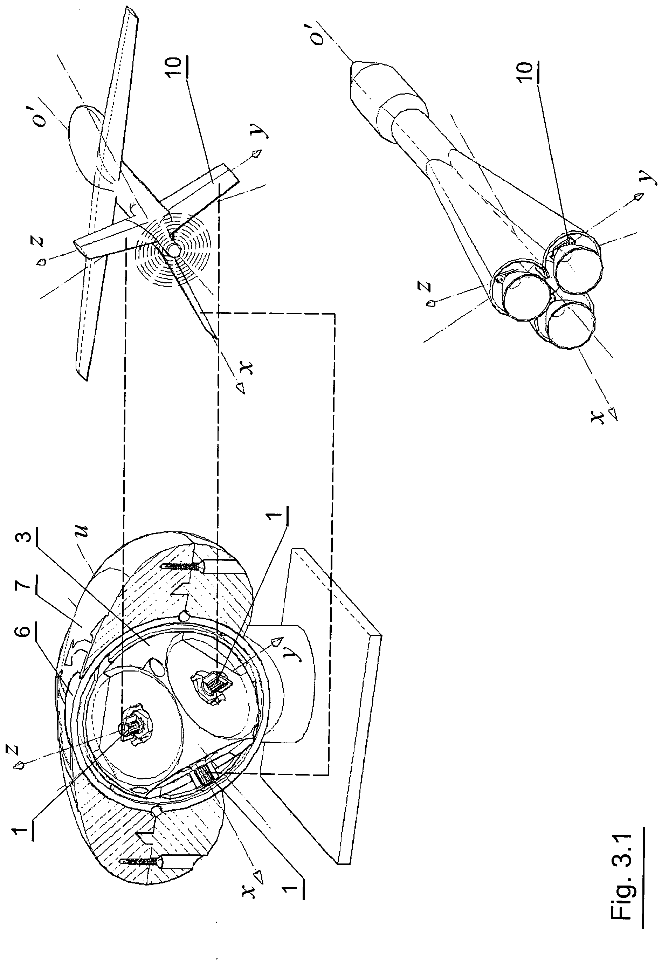

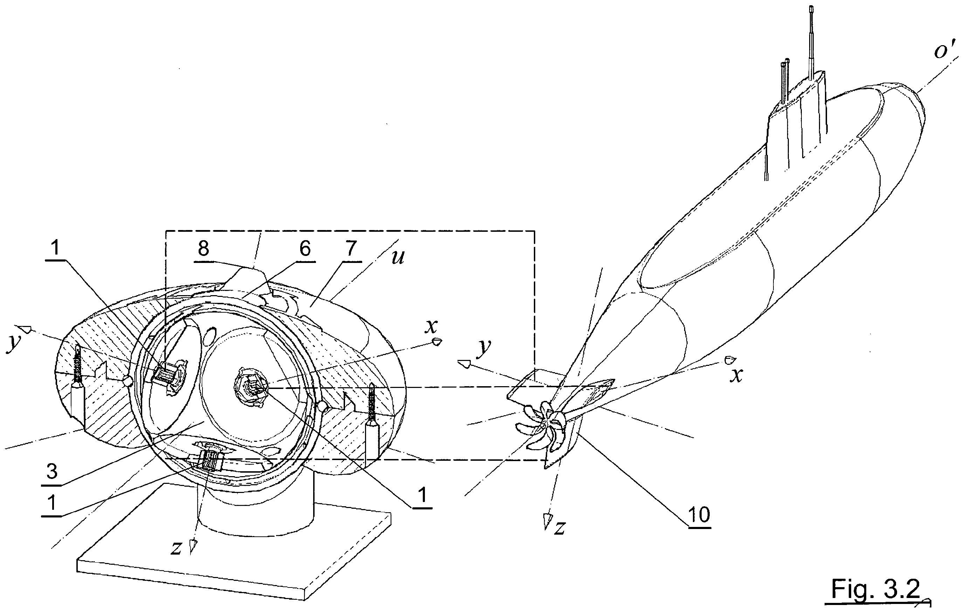

During mounting and pointing of the handlebar with handle at the intersection of the axes of the angular displacement sensors in a way that the *u*-axis is horizontal and parallel to the main axis *o'* of the machine or device, one can easily and directly control the triad of control elements 10, e.g. pilotless aircraft (drone), to direct a trio of expansion nozzles of the rocket engines, rocket, and space shuttle (Fig. 3.1), or a triad of submarine rudders (Fig. 3.2). The axis of rotation of the triad of control elements 10 is parallel to the axes of rotation of the angular displacement sensors 1, but the triad of control elements 10 rotates in the opposite direction. In such a control, the triad of control elements 10 is located close together, which simplifies the construction and reduces the weight of the machine or device.

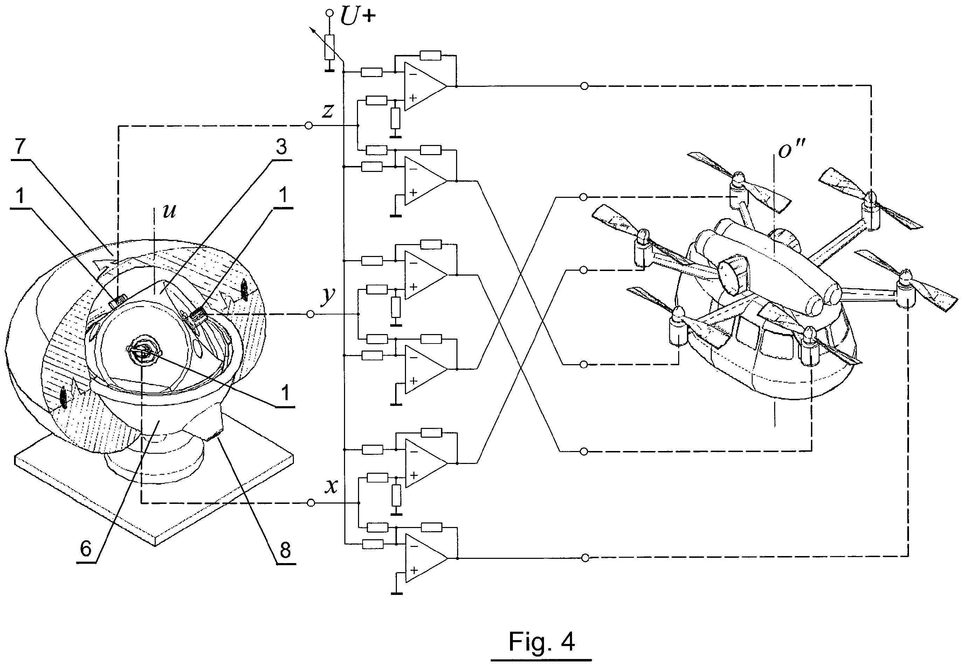

When mounting and aligning the handlebar with handle at the intersection of the axes of the angular displacement sensors in a way that its u-axis is vertical and parallel to the main axis o" of the machine or device, we can easily and directly control the machine or device with vertical drive, such as hexacopter (Fig. 4).

The advantage of the handlebar with handle at the intersection of the axes of the angular displacement sensors is the instinctive control of the machine or device corresponding to the natural reflexes of human, which makes it possible to react promptly and quickly to situations that arise.

### Brief description of the drawings

The drawings depict the individual parts, the complete composition and the possible use of the handlebar with handle at the intersection of the axes of the angular displacement sensors from different angles:
Fig. 1.1 illustrates by means of the imaginary cube the spatial arrangement of the angular displacement sensors 1 and the conduit tube 2 passing through the opening in the handlebar cover 6 in a sectional view of the plane *uz*, in the technical dimension.
Fig. 1.2 depicts the position of the angular displacement sensors 1 in the handlebar core 3, shown in section along the *yz* plane, and the conduit tube 2 passing into the stand, in the technical dimension. In the drawing, the recesses 9 in the core 3 of the handlebar are also visible in the drawing.

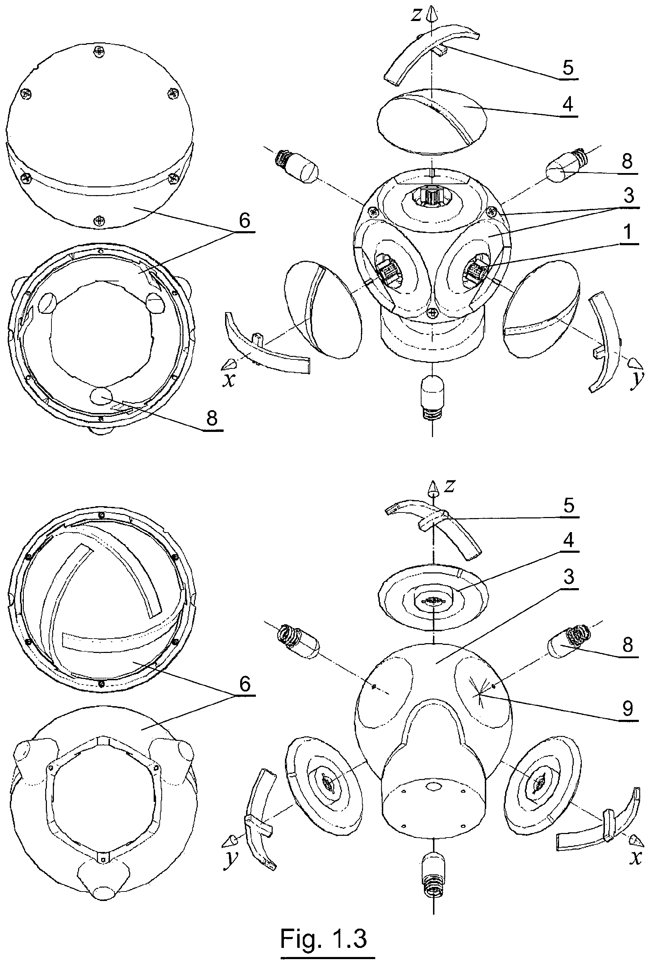

Fig. 1.3 depicts in the opposite direction and in the direction of the *u*-axis the two halves of the core cover 6 and the handlebar core 3 with angular displacement sensors 1, the spatially distributed sensor couplings 4, and cross drivers 5, in technical isometry. The depiction also involves the distribution of the bushing 8 with springs.
Fig. 1.4 depicts a folded handlebar with a core cover 6 in cross section along the *yz* plane and without the handle 7 of the handlebar, in a right and left side view. The section also depicts a detailed enlargement of the recesses 9 in the handlebar core 3 and the position, the zero and the maximum deflection of the bushing 8 with springs.
Fig. 1.5 reveals the view of the sensor couplings 4 and the cross drivers 5 in the exposed front part of the core cover 6 with the handle 7 of the handlebar in the cross-section.
Fig. 1.6 depicts a fully folded handlebar with handle 7 of the handlebar in cross-sectional view of an opening in the core cover 6.

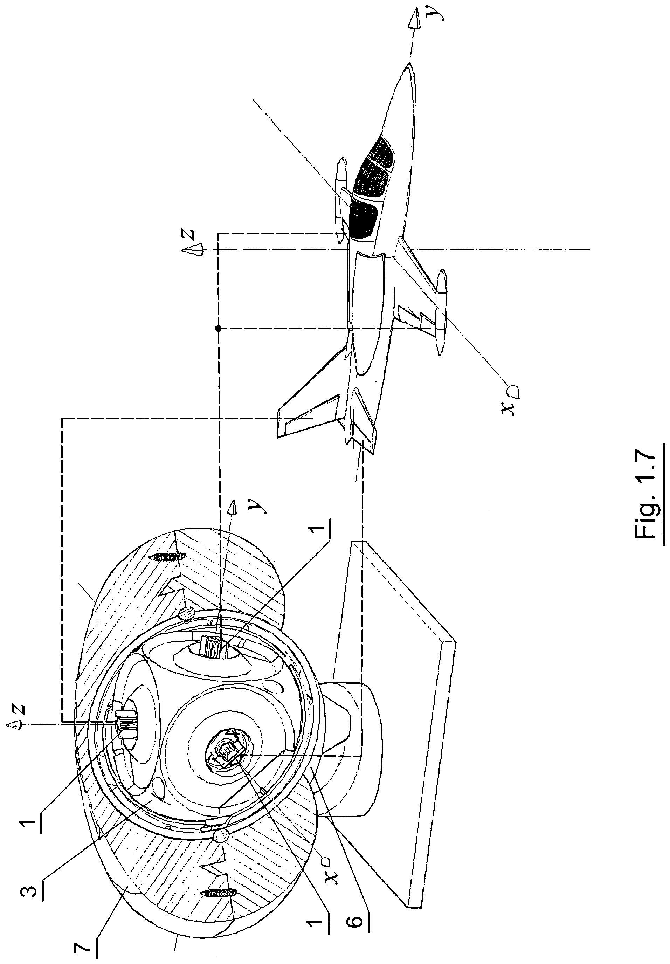

Fig. 1.7 depicts a handlebar with the exposed shafts of the angular displacement sensors 1 in the technical dimension. The dotted line indicates the connections between the angular displacement sensors 1 and the respective aircraft control surfaces, or aircraft model.
Fig. 2 depicts one handlebar from a pair of the double handlebar device with a two-handed handle 7 of the handlebar, in a technical dimension. It also shows an electrical circuit diagram of a single strand, double handlebar device, i.e. connection of the selsyns of the ST1, ST2 transmitters, the angular displacement sensors, and the selsyn of the SR receiver of the control surface using four-pole selsyns.
Fig. 3.1 depicts a handlebar with exposed shafts of the angular displacement sensors 1 whose axis *u* is aligned parallel to the main axis *o*' of the pilotless aircraft (drone). Handle 7 of the handlebar is shown in section, in a technical dimension. The angular displacement sensors 1 are chained-dotted with the triad of control elements 10, specifically with the triad of drone control surfaces. Similar interconnection is also possible with a triad of devices for directing expansion nozzles of rocket engines.
Fig. 3.2 presents a view similar to Fig. 3.1. The difference between the figures is that the angular displacement sensors 1 are rotated about the axis *u* by 180°. The angular displacement sensors 1 are chained-dotted with the triad of control elements 10, specifically with the triad of submarine rudders.
Fig. 4 depicts a handlebar, the axis *u* of which is directed parallel to the main axis of the hexacopter in a technical isometry. To increase understandability of the layout, a simple electrical diagram is shown in the drawing as one of the possible solutions for hexacopter control. The exposed angular deflection sensors 1 are chained-dotted through the pairs of inverting amplifiers with the corresponding hexacopter motors.

### Detailed description of the invention

The implementation of the handlebar with handle at the intersection of the axes of the angular displacement sensors is evident from the principle of the invention and from the attached drawings (Figs. 1.1 - 4). As angular displacement sensors 1, potentiometers, rotary digital incremental and/or absolute sensors, encoders, selsyns, rotary switches, etc., may be used. The handlebar with the handle at the intersection of the axes of the angular displacement sensors can be locked into the zero position by means of bushing 8 with springs moving along the recesses 9 in the handlebar core 3. When using angular displacement sensors 1 of larger dimensions, we use a handlebar with a two-handed handle at the intersection of the axes of the angular displacement sensors. As an example serves the double handlebar device using selsyns (Fig. 2). With this elaboration, a device for locking the zero position is not necessarily required. The position of the selsyns of the SV1, SV2 transmitters is given by the reverse position of the selsyn of the SP receiver equipped with the power control. Feedback to selsyns of the SV1, SV2 transmitters is proportional to the forces acting on the selsyn SP receiver, allowing sensory control of the machine or device.

The handlebar with handle at the intersection of the axes of the angular displacement sensors contains many sliding surfaces. It is obvious that for its construction materials with low coefficient of friction, especially solid friction, can be used. The stress on the angular displacement sensors 1 as well as the friction between the surfaces of the handlebar core 3 and the sensor couplings 4 can be reduced by using bearings.

### Industrial applicability

The handlebar with handle at the intersection of the axes of the angular displacement sensors is suitable for its instinctive, fast and prompt handling corresponding to natural human reflexes, especially for controlling aircrafts, drones, rockets, space shuttles, submarines, hexacopters, space maneuvering units, undersea robots, models, and remotely controlled cameras. It allows shortening of pilot training. It is useful for computer games and wherever joysticks are still being used. No legs are required to rotate about the *z*-axis. Physically disadvantaged persons can also drive machines and devices.

## Claims

1. Handlebar with handle at the intersection of the axes of the angular displacement sensors, **characterized by that** the center of the handle (7) of the handlebar of different shape, usable for both single and double handling controls, is identical to the intersection of axes of the angular displacement sensors (1), i.e. with the beginning of the Cartesian coordinate system, where *x*, *y, z* coordinates are identical to the axes of the angular displacement sensors (1), whereby the torque from the handle (7) of the handlebar connected to the core cover (6) is transmitted to the angular displacement sensors (1) located in the handlebar core (3) by means of cross drivers (5) via the sensor couplings (4), where the inner part of the cross driver (5) fits into a groove in the sensor coupling (4) and the outer part into a groove in the core cover (6), and the handlebar core (3) is connected to machine or device by means of the conduit tube (2) passing through an opening in the handlebar cover (6), in the direction of the body diagonal in the imaginary cube centered at the beginning of the above mentioned coordinate system and through this conduit tube (2), a power supply is provided for the angular displacement sensors (1) and signal terminals, where the size and shape of the opening in the core cover (6) are determined by the diameter of the conduit tube (2) and by the range of the angular displacement of the angular displacement sensors (1).

2. Handlebar with handle at the intersection of the axes of the angular displacement sensors according to claim 1 **characterized by that** in the zero position it is locked by means of bushing (8) with springs, the reciprocal effect of which is realized by movement along the recesses (9) in the handlebar core (3), with the constant inclination of the surfaces to the angle (Fig. 1.4).

3. Handlebar with handle at the intersection of the axes of the angular displacement sensors according to either the claims 1 or the claim 2, **characterized by that** its *u*-axis is directed horizontally and parallel to the main axis o' of the machine or device, thus allowing simple and direct controlled triad of control elements (10) (Figs. 3.1 and 3.2).

4. Handlebar with handle at the intersection of the axes of the angular displacement sensors according to the claim 1 or 2, **characterized by that** its *u*-axis is directed vertically and parallel to the main axis *o*" of the machine or device, thus allowing simple and direct control of machines and devices with vertical drive, for example hexacopters (Fig. 4).

## Amended claims

### Amended claims in accordance with Rule 137(2) EPC.

1. Handlebar with handle at axes intersection of angular displacement sensors, **characterized by that** a center of the handle (7) of the handlebar of different shape, usable for both single and double handling controls, is identical to the intersection of the axes of the angular displacement sensors (1), i.e. with the beginning of the Cartesian coordinate system, where *x, y, z* coordinates are identical to the axes of the angular displacement sensors (1), whereby a torque from the handle (7) of the handlebar connected to a core cover (6) is transmitted to the angular displacement sensors (1) located in a handlebar core (3) by means of cross drivers (5) via sensor couplings (4), where the inner part of the cross driver (5) fits into a groove in the sensor coupling (4) and the outer part into a groove in the core cover (6), and a handlebar core (3) is connected to machine or device by means of aconduit tube (2) passing through an opening in the core cover (6), in the direction of the major *u*-axis, of a body diagonal in the imaginary cube centered at the beginning of the above mentioned coordinate system and through this conduit tube (2), a power supply is provided for the angular displacement sensors (1) and signal terminals, where the size and shape of the opening in the core cover (6) are determined by the diameter of the conduit tube (2) and by the range of the angular displacement of the angular displacement sensors (1).

2. Handlebar with handle at axes intersection of angular displacement sensors according to claim 1 **characterized by that** in the zero position it is locked by means of bushing (8) with springs, the reciprocal effect of which is realized by movement along the recesses (9) in the handlebar core (3), with the constant inclination of the surfaces to the angle.

3. Handlebar with handle at axes intersection of angular displacement sensors according to either the claims 1 or the claim 2, **characterized by that** its *u*-axis is directed horizontally and parallel to the main axis *o*' of the machine or device, thus allowing simple and direct controlled triad of control elements (10).

4. Handlebar with handle at axes intersection of angular displacement sensors according to the claim 1 or 2, **characterized by that** its *u*-axis is directed vertically and parallel to the main axis *o*" of the machine or device, thus allowing simple and direct control of machines and devices with vertical drive, for example hexacopters.
